# EUROPEAN PATENT APPLICATION

(11) **EP 2 213 151 A1**
(43) Date of publication of application: **04.08.2010**
(21) Application number: 10000987.7
(22) Date of filing: 01.02.2010
(51) Int. Cl.: A01C 1/04, B65B 13/02

(54) **Device for temporarily storing of a substantially oblong crop.**

(30) Priority: 30.01.2009 BE 200900049; 09.03.2009 BE 200900142
(71) Applicant: BAEKELANDT JAN METAALCONSTRUCTIE, 8760 Meulebeck (BE)
(72) Inventor: Baekelandt, Jan, B-8760 Meulebeke (BE)
(74) Representative: Quintelier, Claude

(57) **Abstract**

Device for temporary storage of a substantially oblong crop (15), in particular leeks, which device has a feed element (12) for supplying the crop (15) to a storage element (14), which storage element (14) is fitted with a first and a second winding roller (6,7) for unwinding a first and second strip (8,9) respectively, which storage element (14) is furthermore fitted with a rolling element (5), such that the crop (15) supplied by the feed element (12) can be introduced between the first and second strips (8,9) and the first and second strips (8,9) together with the crop (15) can be rolled by the rolling element (5), wherein the feed element (12) comprises two substantially parallel conveyor belts (2,3) which are arranged such that they supply the crop (15) in a substantially upright position, and wherein the storage element (14) is designed to roll the crop (15), supplied in the substantially upright position, still in its substantially upright position.

## Description

The invention relates to a device for temporary storage of a substantially oblong crop, in particular leeks, which device has a feed element for supplying the crop to a storage element, which storage element is provided with a first and a second winding roll for unwinding a first and second strip respectively, which storage element is furthermore fitted with a rolling element, such that the crop supplied by the feed organ can be inserted between the first and second strips, and the first and second strips together with the crop can be rolled up by the rolling element.

Such a device is known from BE 644.454. In the known device the feed element is formed by a toothed wheel in which the crop is inserted horizontally piece by piece. From the first and second winding rollers, the strips are supplied to the toothed wheel where the crop is inserted between the first and second strips in order then to be rolled up in the horizontal position by the rolling element.

One disadvantage of the known device is that firstly by the use of the toothed wheel, the crop cannot be supplied virtually mechanically and that secondly, due to the rolling of the crop in the horizontal position, damage can occur to the crop which reduces the quality of the crop.

The object of the invention is a device for temporary storage of a substantially oblong crop, in particular leeks, wherein the crop can be supplied mechanically and stored such that the crop is not damaged.

A device according to the invention therefore has the feature that the feed element comprises two substantially parallel conveyor belts which are arranged such that they supply the crop in substantially upright position, and wherein the storage element is designed to roll the crop, supplied substantially upright, still in its substantially upright position. By using conveyor belts, the crop can be brought mechanically to the storage element. By storing the crop upright, the different rolled layers do not exert any pressure on each other, whereby the pressure cannot then cause damage to the crop.

A first preferred embodiment of a device according to the invention has the feature that the willing element comprises a first shaft which is drivable by a motor and on which is attached a first end of each of the first and second strips. The strips can therefore easily be rolled up mechanically.

A second preferred embodiment of a device according to the invention has the feature that the rolling element has a disc which is arranged such that the crop can rest on this when rolled between the first and second strips. The crop thus rests on the disc and cannot fall out of the strips.

A third preferred embodiment of a device according to the invention has the feature that the storage element is fitted with a first and second guide roller to guide the first and second strips respectively to the rolling element, which guide rollers are arranged at the level of the feed element. The strips are thus guided and the crop delivered between the first and second strips in a simple manner.

A fourth preferred embodiment of a device according to the invention has the feature that the feed element comprises a first and a second segment, wherein the second segment is mounted pivotable in relation to the first segment in order to move in a pivoting manner from and to the storage element in order to follow the rolling movement of the storage element. As a result the second segment can follow the increase in volume of the storage element when this is filled with crop and the crop remains supported by the second segment until stored in the storage element.

A fifth preferred embodiment of a device according to the invention has the feature that the second segment has a first conveyor belt, one end of which opens at the first winding roller, which second segment furthermore has a pivotable plate which extends substantially parallel to said first conveyor belt of the second segment, and wherein the second winding roller during unwinding is mobile along said plate on the side of the plate where the first conveyor belt of the second segment extends. The plate in cooperation with the second segment ensures that the crop remains supported until stored in the storage elements, so it cannot fall during the storage operation.

A sixth preferred embodiment of a device according to the invention has the feature that the feed element comprises a first and a second segment which are arranged at an angle to each other, and wherein the storage element is installed mobile in relation to the feed element. Due to the movement of the storage element and the second segment, the crop is supported until stored in the storage element, so it cannot fall during the storage operation.

The invention will now be described in more detail with reference to embodiment examples shown in the drawing. The drawings show:
figure 1 a top view of a first embodiment of a device according to the invention;
figure 2 a side view of the device according to figure 1;
figures 3 and 4 a diagrammatic reproduction of a second embodiment of a device according to the invention;
figures 5, 6 and 7 a diagrammatic reproduction of a third embodiment of a device according to the invention, and
figures 8, 9 and 10 a diagrammatic reproduction of a fourth embodiment of a device according to the invention.

In the drawings, the same or similar elements have the same reference numerals.

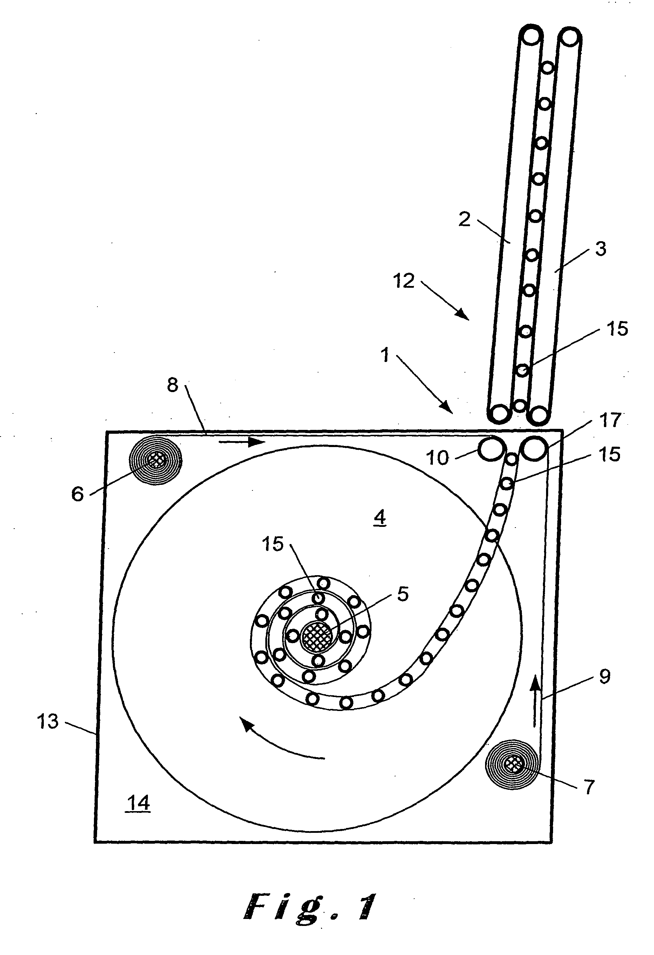

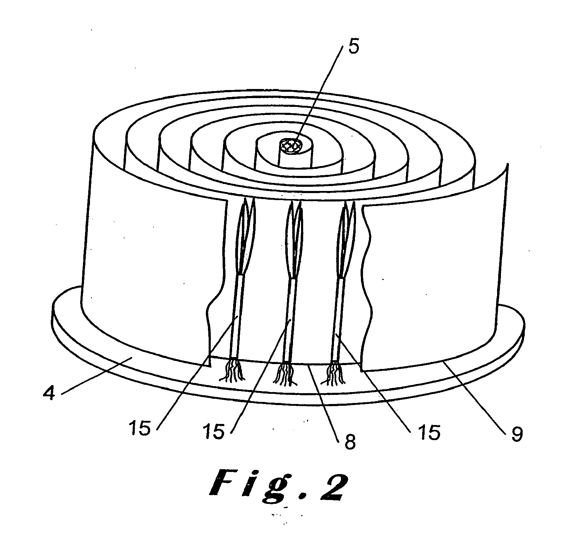

The first embodiment of the device 1 according to the invention shown in figures 1 and 2 is suitable for storage of leeks. It is however clear that the device according to the invention in all embodiments is suitable for all types of substantially oblong crop such as leeks, carrots, celery etc. The device for temporary storage of a substantially oblong crop comprises a feed element 12 for supplying the crop 15 and a storage element 14 for storing the supplied crop.

In the first embodiment the feed element 12 preferably has two conveyor belts 2, 3 which can be driven in synchrony by a motor (not shown) and are installed substantially parallel to each other. The conveyor belts 2 and 3 are arranged such that the crop 15 is held substantially vertical or upright between them. This has the advantage that the crop, after preferably being lifted mechanically, need not be turned and is brought directly from the lifting machine to the feed element.

The storage element 14 is preferably erected in a housing 13 in order firstly to protect the stored crop and secondly to prevent injury from the rotating parts of the storage element. The housing is preferably transparent and permeable in order to give the crop sufficient air and from the outside to see how much crop is stored. For this the housing is preferably made of netting.

The storage element 14 comprises a first 6 and a second 7 winding roller on which are wound a first strip 8 and a second strip 9 respectively. The strips 8 and 9 are preferably made of fibre-reinforced plastic. The strips are guided preferably via a first guide roller 10 and a second guide roller 11 to an outlet of the feed element 12. In the first embodiment the guide rollers 10 and 11 are in line with the conveyor belts 2 and 3. Thus the crop can be taken by the strips virtually directly from the conveyor belts. According to a variant of this embodiment it is naturally also possible to place the winding rollers 6 and 7 close to the outlet from the feed element. However the design with the guide rollers is preferred as here the winding rollers 6 and 7 can be placed in the corners of the housing, whereby the available space is used more efficiently.

The storage element furthermore comprises a rolling element which is preferably formed by a first shaft 5 which can be driven by a motor (not shown) in order to cause the first shaft to rotate. The first shaft is arranged substantially vertically. Strips 8 and 9 are attached to the first shaft 5 so that rotation of the first shaft 5 causes the winding and unwinding of the strips. The storage element preferably also has a disc 4 through which the first shaft extends, which disc is arranged at the bottom in the storage element.

Because the first shaft 5 turns and the first and second shafts 8, 9 are connected with the first shaft, rotation leads to the strips being unwound from their respective winding rollers 6, 7 and guided along the guide rollers 10 and 11. As a result strips 8 and 9, after leaving the guide rollers, are arranged virtually parallel to each other and spaced apart. This spacing is selected such that the leek stems are held firmly between the strips. If the leek or the crop 15 is now supplied via the feed element 12, the leek stems are introduced one by one between the first and second strips and thus reach the rolling element. Because the first shaft is arranged vertically, the inserted leek stems are transported further substantially upright. Rotation of the first shaft ensures that furthermore the strips are rolled up with the leeks in the upright position, whereby the leek stems are each held between the first and second strips. If the rolling element is fitted with the disc 4, the leeks can rest on the disc which further ensures that the leek stems cannot fall out of the storage element. The leeks are preferably rolled up so that the roots point towards the disc 4. This also allows any clumps of earth adhering to the leek to fall onto the disc during drying.

Because the leek or crop is wound substantially by the upright position, the resulting different layers do not exert pressure on each other, whereby the leek or the crop is safely stored and the risk of its crushing is considerably reduced.

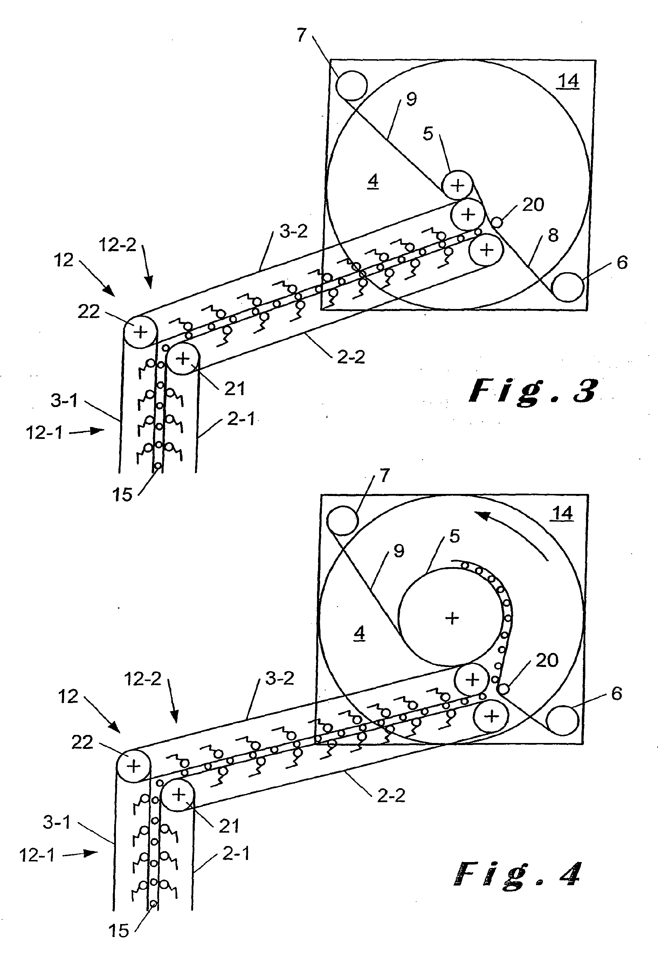

Figures 3 and 4 show a second embodiment of a device according to the invention, whereby figure 3 shows the device at a moment that the rolling of the crop begins and figure 4 shows the device at a moment at which a quantity of crop is already stored. The second embodiment differs from the first amongst others in that the feed element 12 has a first segment 12-1 and a second segment 12-2. The second segment is pivotable in relation to the first segment. For this the first conveyor belt 2-2 and the second conveyor belt 3-2 of the second segment are each mounted on a hinge shaft 21 or 22. Because of the pivoting mounting, the second segment can move from and to the first shaft 5 and hence from and to the storage element in order to follow the unrolling and rolling movement of the latter when the crop is rolled or unrolled.

One end of the second segment 12-2 of the feed element opens close to the strips 8 and 9 of the winding rollers 6 and 7. The first conveyor belt 2-2 and the second conveyor belt 3-2 from the second segment open at the first strip 8 and the second strip 9 respectively. As shown in figures 3 and 4, the second conveyor belt 3-2 touches the second strip 9 on its return after supplying the crop, whereas the first conveyor belt 2-2 comes to rest against the first strip 8 at the moment when this begins its return movement. A first guide 20 is arranged mobile close to the end of the first conveyor belt 2-2. The first guide 20 is preferably arranged such that it stands in the extension of a line extending between the first conveyor belt 2-2 and the second conveyor belt 3-2 of the second segment, along which the crop is transported. The movement of the first guide is achieved for example by a mobile arm (not shown in the figure) on which the first guide is mounted.

When the crop is supplied upright and its storage begins (figure 3), the end of the second segment is virtually level with the first shaft 5. The first strip 8 and the second strip 9 then both touch the second conveyor belt 3-2, and the first guide 20 presses the first strip towards the second segment. The crop supplied, on leaving the second segment, comes into contact with the first strip at a point slightly past the first guide 20. Because the first strip touches the second conveyor belt, the crop is held upright on transition from the conveyor belt to the first strip. Due to rotation of the second conveyor belt, the crop is moved further in the direction of the first shaft 5 and comes into contact with the second strip 9 in order to be held upright between the first and second strips. In this position the crop between the strips is rolled around the first shaft 5. During this transition from conveyor belt to strips, the crop is supported by the cooperation of the conveyor belts, the strips and the first guide, and this prevents it from falling from its upright position and thus disrupting the storage.

As more crop is supplied, the volume of stored crop increases and hence also the radius of the circle formed around the first shaft 5, within which the first and second strips are wound with the crop 15 in-between. In order to be able to follow the increase in radius of this circle, the second segment 12-2 is now mounted pivoting in relation to the first. The rotation of the second segment in relation to the first 12-1 ensures that the second segment bends away from the first shaft 5 (see figure 4) and therefore does not prevent the expansion of the circle. Because the second conveyor belt 3-2 touches the second strip 9, the second segment pivots away in synchrony with the increase in the circle radius. The movement of the first guide 20 also ensures that this is always correctly positioned in relation to the second segment so that during the entire storage operation, cooperation between the first guide, second segment and strips is retained and the crop is suitably supported. On unwinding of the stored crop naturally the process is reversed and the second segment pivots back towards the first shaft 5. In this way a similar process is performed and the crop is also suitably discharged.

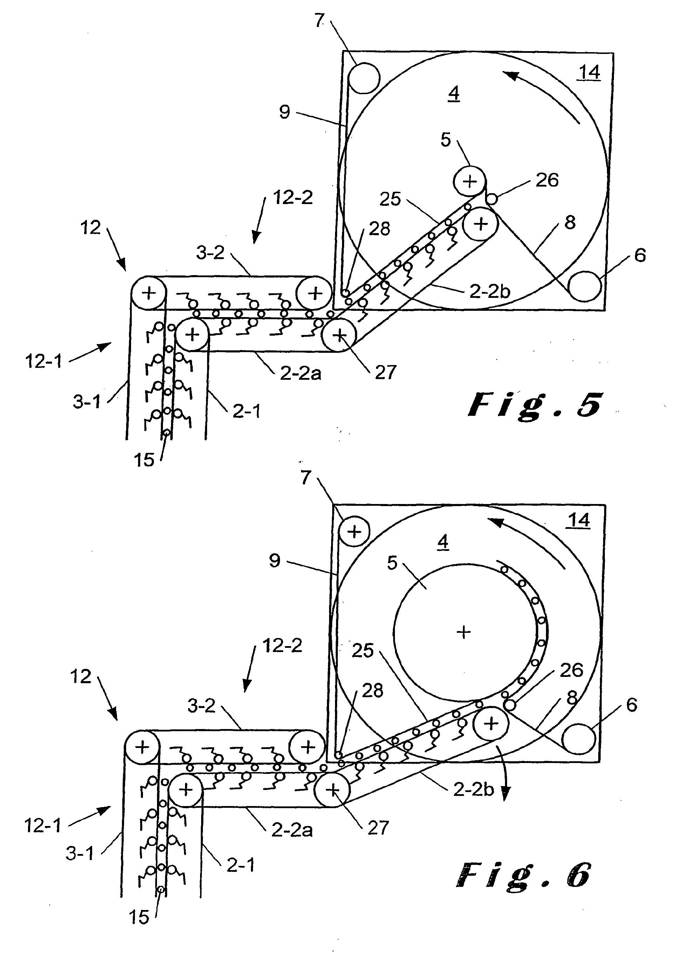

Figures 5, 6 and 7 show a third embodiment of a device according to the invention, wherein figure 5 shows the device at the moment that the rolling of the crop begins and figure 6 shows the device at a moment at which a quantity of crop is already stored. In this embodiment too the feed element has a first segment 12-1 and a second segment 12-2. The first conveyor belt from the second segment comprises a first part segment 2-2a and a second part segment 2-2b, wherein the second part segment is mounted pivoting in relation to the first part segment. A hinge shaft 27 ensures the latter pivot movement. A second guide 26 prevents the first strip 8 from bending and has a function which is similar to that of the first guide 20. The second conveyor belt 3-2 from the second segment is preferably arranged fixed. The second conveyor belt 3-2 and the first part segment 2-2a extend substantially parallel to each other. One end of this second conveyor belt touches the housing of the device.

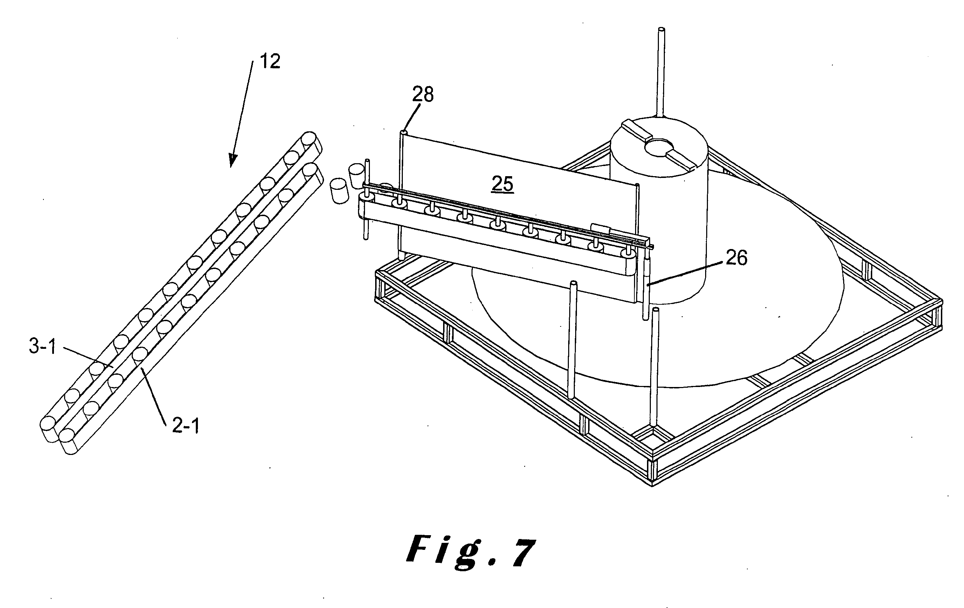

In this third embodiment the second segment of the feed element furthermore has a pivoting plate 25 which extends substantially parallel to the second part segment 2-2b of the first conveyor belt. For this the plate 25 is mounted on a pivoting third guide 28 which is preferably located along one edge of the device as shown in figure 7. The second strip 9 during unwinding from the winding roller 7 runs around the third guide 28 and then along the plate 25 towards the first shaft 5. The second strip runs along the plate on the side of the plate where the first conveyor belt of the second part segment 2-2b extends. Thus the plate 25, the second strip 9 and the second part segment 2-2b run virtually parallel to each other to ensure transport of the crop.

The first segment 12-1 and the second segment 12-2 of the feed element are arranged substantially perpendicular to each other so that the crop 15 describes angle of 90° at the transition from the first to the second segment. When the supplied crop reaches with hinge shaft 27, it leaves the second conveyor belt 3-2 and comes into contact with the second strip 9 and the plate 25. The crop is then held between firstly the second part segment 2-2b of the conveyor belt and secondly the second strip 9 and the plate 25. The movement of the second part segment and the second strip ensure that the crop moves further towards the end of the conveyor belt. During this movement this crop is supported by the plate which, because it is pivoting mounting, exerts a pressure on the crop and thus ensures that the crop does not fall from its upright position.

At the start of storage of the crop, the plate 25 (see figure 5) stands such that its free end is close to the first shaft 5. The second guide 26 is also close to the first shaft 5 in the extension of the line along which the crop is transported. When the crop has reached the free end of the plate 25 and the end of the second part segment 2-2b, it comes into contact with the first strip 8 so that it can be held between the first and the second strips. By rotation of the first shaft 5, the crop is wound between the strips in the upright position.

As the circle formed by the stored crop expands (see figure 6), the plate 25 around the third guide 28 pivots away from the first shaft 5 and furthermore the second part segment 2-2b pivots around shaft 27 in order to allow the winding. The second guide 26 follows this movement to guide the first strip suitably. Because the crop is still held between the plate and the second part segment, even when this pivots away from the first shaft 5, it remains well supported during the entire winding operation. Finally on unwinding, a reverse movement takes place.

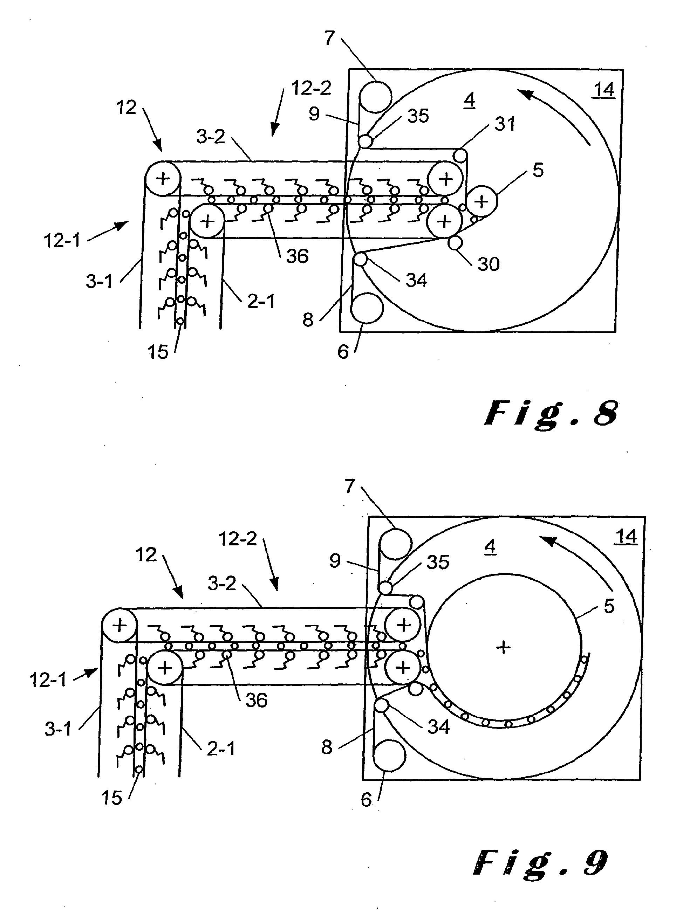

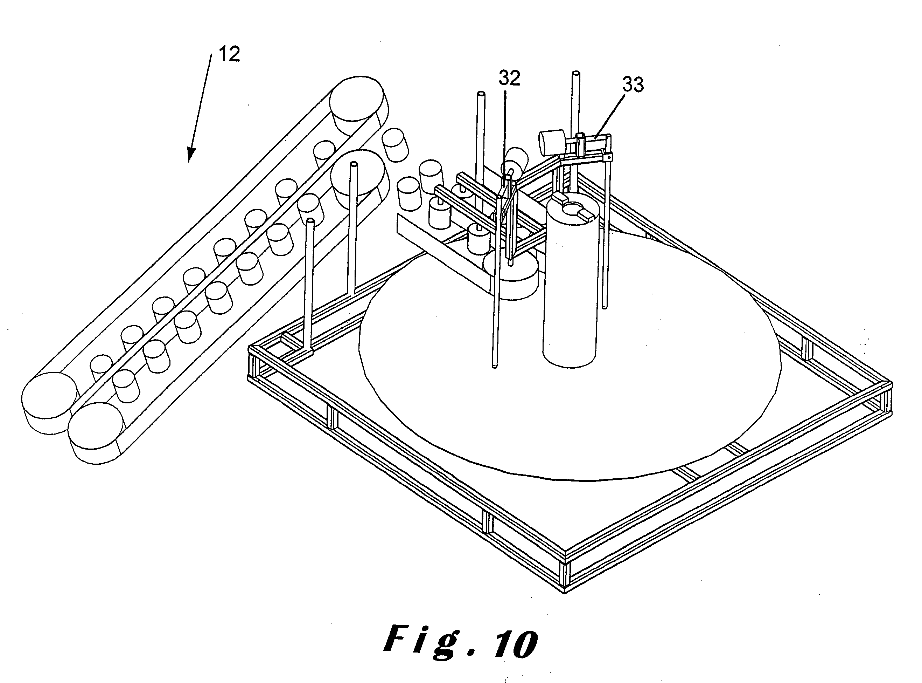

Figures 8, 9 and 10 show a fourth embodiment of a device according to the invention, wherein figure 8 shows the device at the moment that rolling of the crop begins and figure 9 shows the device at a moment when a quantity of crop is already stored. In this embodiment the feed element 12 again comprises a first segment 12-1 and second segment 12-2. The first and second segments in this embodiment are arranged at an angle, preferably of 90°, to each other. Furthermore the storage element 14 is arranged mobile in relation to the feed element. A fourth guide 30 and fifth guide 31 are mounted mobile, for example each on mobile arms 32 and 33 as shown in figure 10. The fourth and fifth guides are mobile from and to the first shaft 5. A sixth guide 34 and seventh guide 35 are also arranged close to an edge of the device. The first strip 8 and second strip 9 are guided via the sixth guide 34 and the fourth guide 30, and the seventh guide 35 and fifth guide 31 respectively, from their respective winding rollers 6 and 7, to the first shaft 5. The strips which thus run along these guides 34, 30 and 31, 35 delimit an aisle 36 within which extends a fraction of the second segment 12-2. One end of the second segment opens at the part of the strips which is between the fourth guide 30 and fifth guide 31.

At the start of storage, the fourth guide 30 and the fifth guide 31 are close to the first shaft 5 and the second segment has extended relatively deeply into the storage element. The crop 15 supplied by the feed element is transported, held upright between the conveyor belts of the second segment, up to the end thereof, where it is picked up by the strips 8 and 9. The fourth and fifth guides ensure that the strips are pressed in the direction of the second part segment in order to support the crop. The second strip 9 in this starting phase lies against the first shaft 5 so that the crop which leaves the second segment is brought towards the second strip. The first strip 8 then passes by and the crop is held between the first and second strips and wound around the first shaft 5.

As the circle formed by the stored crop expands, the storage element is moved away in synchrony with the expansion in the circle of the feed element, and the fourth and fifth guides move with it so that they come closer to the sixth and seventh guides. Thus the crop can be stored while remaining supported by the second segment and the strips with their fourth and fifth guides. The direction of rotation of the storage element can be selected as a function of the unloading device selected by the user. Finally for unwinding, the operation is performed in the reverse direction.

Preferably in all embodiments sprung elements 36 are mounted in the conveyor belts in order to exert a pressure on the conveyor belt and thus hold the crop firmly in the space between the parallel conveyor belts.

## Claims

1. Device for temporary storage of a substantially oblong crop, in particular leeks, which device has a feed element for supplying the crop to a storage element, which storage element is fitted with a first and a second winding roller for unwinding a first and second strip respectively, which storage element is furthermore fitted with a rolling element, such that the crop supplied by the feed element can be introduced between the first and second strips and the first and second strips together with the crop can be rolled by the rolling element, **characterised in that** the feed element comprises two substantially parallel conveyor belts which are arranged such that they supply the crop in a substantially upright position, and wherein the storage element is designed to roll the crop, supplied in the substantially upright position, still in its substantially upright position.

2. Device according to claim 1, **characterised in that** the rolling element has a first shaft which can be driven by a motor and on which is attached a first end of each of the first and second strips.

3. Device according to claims 2, **characterised in that** a second end of the first and second strips respectively is attached to the first and second winding roller respectively, which winding rollers can be driven in synchrony.

4. Device according to any of claims 1 to 3, **characterised in that** the rolling element has a disc which is arranged such that the crop can rest thereon when rolled between the first and second strips.

5. Device according to any of claims 1 to 4, **characterised in that** the storage element is fitted with a first and second guide roller in order to guide the first and second strips respectively to the rolling element, which guide rollers are arranged at the level of the feed element.

6. Device according to any of claims 1 to 4, **characterised in that** the feed element has a first and a second segment, wherein the second segment is mounted pivotable in relation to the first segment, in order to move pivoting from and to the storage element in order to follow the rolling movement of the storage element.

7. Device according to claim 6, **characterised in that** one end of the second segment of the feed element opens close to the strips of the winding rollers, such that a first and second conveyor belt of the second segment open at the first and second strips respectively.

8. Device according to claim 7, **characterised in that** it comprises a first guide for guiding the first strip, which first guide is arranged mobile close to said end in order to follow the pivoting movement of the second segment.

9. Device according to claim 8, **characterised in that** the first guide is mounted such that it is in the extension of a line which extends between the first and second conveyor belts of the second segment.

10. Device according to claim 6, **characterised in that** the second segment has a first conveyor belt of which one end opens at the first winding roller, which second segment furthermore has a pivoting disc which extends substantially parallel to the said first conveyor belt of the second segment, and wherein the second strip during unwinding is mobile along said plate on the side of the plate where the first conveyor belt of the second segment extends.

11. Device according to claim 10, **characterised in that** the first conveyor belt of the second segment has a first and a second part segment and of which the second part segment extends substantially parallel to the plate, which second part segment is mounted pivoting in relation to the first part segment.

12. Device according to claim 10 or 11, **characterised in that** it has a second and a third guide for guiding the first and second sections respectively, which second guide is mounted mobile close to said end in order to follow the pivoting movement of the second segment, which third conductor is mounted close to said plate in order to bring the second strip to the plate.

13. Device according to any of claims 11 or 12, **characterised in that** the second conveyor belt extends substantially parallel to the first part segment of the first conveyor belt.

14. Device according to any of claims 1 to 4, **characterised in that** the feed element comprises a first and a second segment which are arranged at an angle to each other, and wherein the storage element is arranged mobile in relation to the feed element.

15. Device according to claim 14, **characterised in that** the second segment opens in an aisle delimited by a fraction of the first and second strips and wherein one end of the second segment opens at the strips.

16. Device according to claim 15, **characterised in that** it comprises a fourth and a fifth guide for guiding the first and second winding roller respectively, which fourth and fifth guides are arranged mobile next to said end.

17. Device according to any of claims 1 to 16, **characterised in that** the storage element is arranged in a housing.
